# FASCICULE DE BREVET EUROPEEN

(11) **EP 2 548 093 B1**
(45) Date de publication et mention de la délivrance du brevet: **27.04.2016**
(21) Numéro de dépôt: 11707848.5
(22) Date de dépôt: 09.03.2011
(51) Int. Cl.: H01H 19/02, G05G 1/10, B60K 37/06

(54) **DISPOSITIF DE COMMANDE A COMMUTATEUR ROTATIF RETRO-ECLAIRE PAR UN GUIDE DE LUMIERE**
STEUERVORRICHTUNG MIT LICHTLEITER-RÜCKBELEUCHTETEM DREHSCHALTER
CONTROL DEVICE HAVING A ROTARY SWITCH BACK-LIT BY A LIGHT GUIDE

(30) Priorité: 17.03.2010 FR 1051888
(43) Date de publication de la demande: 23.01.2013
(73) Titulaire: Delphi Technologies, Inc., Troy, MI 48007 (US)
(72) Inventeur: FENDELEUR, Laurence, F-67460 Souffelweyersheim (FR); UHL, Alexandre, F-67400 Illkirch (FR)
(74) Mandataire: Delphi France SAS
(86) Numéro de dépôt international: PCT/EP2011/053567
(87) Numéro de publication internationale: WO 2011/113733

(56) Documents cités:
- EP-A2- 0 976 972
- EP-A2- 1 102 294
- WO-A1-2005/026664
- DE-A1- 4 222 335
- DE-A1- 10 041 875
- US-A- 5 093 764
- US-A1- 2002 097 569

## Description

### DOMAINE TECHNIQUE

La présente invention concerne un dispositif de commande à commutateur rotatif notamment prévu pour équiper un panneau de commande de véhicule automobile, par exemple pour commander les fonctions d'un système de climatisation et de ventilation.

### ARRIERE-PLAN TECHNOLOGIQUE DE L'INVENTION

Généralement, le système de climatisation et de ventilation d'un véhicule automobile comporte un panneau de commande muni de plusieurs commutateurs rotatifs agencés sur une platine. Ces commutateurs rotatifs sont prévus pour commander différentes fonctions, notamment la température de chauffage, la vitesse de ventilation, l'orientation des flux d'air ventilés dans l'habitacle du véhicule en manipulant une molette rotative. Chaque commutateur rotatif est entouré au moins partiellement par une zone d'affichage périphérique comprenant des symboles liés aux fonctions commandées et identifiant différentes positions angulaires du commutateur rotatif.

Pour des raisons pratiques et esthétiques, un dispositif de rétro-éclairage est prévu pour permettre l'illumination de chaque commutateur rotatif, en particulier l'illumination de l'index qui est agencé sur la molette et qui repère la position angulaire du commutateur rotatif, ainsi que l'illumination de la zone d'affichage périphérique.

Pour augmenter le nombre de fonctions commandées par le même dispositif de commande, il est souvent prévu d'agencer au centre du commutateur rotatif un ou plusieurs boutons poussoirs qui comportent eux aussi un dispositif de rétro-éclairage.

Actuellement, pour réaliser un tel type de commutateur rotatif comportant au moins un bouton poussoir en son centre, on utilise un encodeur rotatif tubulaire qui est monté sur la platine et qui fournit à la fois une fonction de commutation électrique et une fonction haptique, ou de retour d'effort (« feeling »). La fonction haptique permet notamment à l'utilisateur d'identifier un nombre défini de positions angulaires sous la forme de crans d'indexation.

Un inconvénient de ce type de commutateur rotatif est que son diamètre est figé, puisqu'il dépend de l'encodeur rotatif choisi. Il en va de même pour la fonction haptique qui est déterminée à la conception par le fabricant de l'encodeur rotatif. Ce type de commutateur rotatif ne permet donc pas au concepteur du panneau de commande d'adapter le diamètre et la fonction haptique à des souhaits particuliers du constructeur du véhicule.

Concernant le dispositif de rétro-éclairage, les solutions actuelles nécessitent généralement un nombre important de diodes électroluminescentes (« LEDs »), une partie de celles-ci étant agencées sous les symboles de la zone d'affichage périphérique, alors qu'une autre partie est agencée sous le commutateur rotatif, à différentes positions angulaires, pour illuminer l'index lumineux dans ses différentes positions angulaires. Ces solutions ne sont pas complètement satisfaisantes car elles posent des problèmes d'encombrement sur la platine et des problèmes d'échauffement dus à l'énergie thermique produite par le nombre important de sources lumineuses. En particulier, le rétro-éclairage de l'index lumineux et du témoin lumineux équipant le bouton poussoir au centre du commutateur rotatif est très difficile à intégrer du fait du peu d'espace disponible au centre et sous le commutateur rotatif.

Des commutateurs rotatifs rétro-éclairés par guides de lumière sont décrits dans le US 5,093,764, le WO 2005/026664, le EP0976972A2 et le DE 4222335.

### RESUME DE L'INVENTION

La présente invention vise à proposer une solution économique aux problèmes mentionnés précédemment.

Dans ce but, l'invention propose un dispositif de commande, notamment pour un véhicule automobile, comportant une platine, un commutateur rotatif et une zone d'affichage périphérique qui sont agencés sur la platine, et un dispositif de rétro-éclairage prévu pour rétro-éclairer le commutateur rotatif et la zone d'affichage périphérique, le commutateur rotatif comportant une molette qui est montée à rotation par rapport à la platine autour d'un axe, la molette étant pourvue d'un index lumineux tournant avec la molette, la zone d'affichage périphérique comportant des symboles lumineux fixes agencés autour du commutateur rotatif, caractérisé en ce que le dispositif de rétro-éclairage comporte au moins une source lumineuse qui coopère avec un guide de lumière éclairant à la fois l'index lumineux et le zone d'affichage périphérique, le guide de lumière étant réalisé d'une seule pièce et fixé sur la platine.

Grâce à l'invention, il est possible de fournir au fabriquant du véhicule une grande diversité dans les dispositifs de commande en terme de dimension des commutateurs rotatifs (hauteur, diamètre) et en termes de dimension et de nombre de boutons poussoirs au centre des commutateurs rotatifs.

De plus, l'invention permet de dissocier la fonction haptique de la fonction rétro-éclairage en s'affranchissant de l'utilisation d'encodeurs rotatifs standards. L'invention permet donc de personnaliser chaque commutateur rotatif, notamment en termes de rétro-éclairage, de fonction haptique, de diamètre, etc.

Le niveau d'intensité lumineuse et d'homogénéité lumineuse fournit par le dispositif de rétro-éclairage selon l'invention est déterminé principalement par le choix du guide optique, en particulier le choix de son matériau, de son aspect de surface, de sa forme, ce qui permet une grande variété d'aspects pour le dispositif de commande selon l'invention.

Selon d'autres caractéristiques avantageuses de l'invention :
- la zone d'affichage périphérique est rétro-éclairée par une portion globalement transversale du guide de lumière ;
- la source lumineuse est déportée transversalement par rapport au commutateur rotatif et par rapport à la zone d'affichage périphérique, et le guide de lumière comporte une portion de guidage qui s'étend depuis la source lumineuse jusqu'à un bord périphérique de la portion transversale ;
- le dispositif de commande comporte deux sources lumineuses, et la portion de guidage comporte deux branches qui s'étendent chacune depuis le bord périphérique de la portion transversale jusqu'à la source lumineuse associée ;
- la portion transversale est agencée au-dessus de la platine de manière à ménager un espace axial ;
- la portion de guidage comporte une portion inclinée entre la source lumineuse, qui est située globalement au niveau de la platine, et le bord périphérique de la portion transversale ;
- un dispositif de commutation électrique mobile, lié en rotation à la molette, est agencé dans l'espace axial de manière à produire un signal de commutation dépendant de la position angulaire de la molette ;
- le guide de lumière a globalement la forme d'une lame qui comporte une surface d'entrée prévue pour permettre une propagation de la lumière émise par la source dans le plan de la lame, et au moins une face transversale de la portion transversale est pourvue de structures en relief visant à diffuser une partie de la lumière qui se propage dans la portion transversale vers l'extérieur du guide de lumière en direction des symboles lumineux fixes de la zone d'affichage périphérique ;
- le guide de lumière comporte une portion axiale qui s'étend à l'intérieur de la molette vers l'index, depuis le bord périphérique interne de la portion transversale, de manière à rétro-éclairer l'index ;
- la portion axiale s'étend sur un secteur angulaire autour de l'axe de rotation, ledit secteur angulaire correspondant globalement à l'amplitude angulaire maximale de déplacement de l'index lumineux;
- la portion axiale est formée de plusieurs languettes axiales qui s'étendent en arc de cercle autour de l'axe de rotation ;
- un élément intermédiaire formant guide de lumière est agencé dans la molette de manière à guider la lumière provenant de la portion axiale jusqu'à l'index lumineux ;
- le commutateur rotatif comporte au moins un bouton poussoir qui est agencé dans un espace annulaire délimité par la molette et qui coopère avec un commutateur à bouton poussoir agencé sur la platine ;
- le commutateur rotatif comporte un corps tubulaire qui est lié en rotation à la molette, la portion transversale s'étend autour du corps tubulaire suivant un secteur angulaire dont les extrémités délimitent un espace angulaire, et une liaison mécanique entre le corps tubulaire et un élément mécanique monté sur la platine est agencée dans l'espace angulaire ;
- l'élément mécanique est une roue dentée qui coopère avec une denture agencée sur le corps tubulaire ;
- l'élément mécanique est une lame élastiquement flexible qui coopère avec une surface de came agencée sur le corps tubulaire de manière à produire un retour d'effort sur la molette.

### BREVE DESCRIPTION DES DESSINS

D'autres caractéristiques, buts et avantages de l'invention apparaîtront à la lecture de la description détaillée qui va suivre, et en regard des dessins annexés, donnés à titre d'exemple non limitatif et sur lesquels:
- la figure 1 est une vue de face qui représente un panneau de commande comportant un dispositif de commande conforme aux enseignements de l'invention et équipé de deux commutateurs rotatifs latéraux et d'un commutateur rotatif central ;
- la figure 2 est une vue similaire à celle de la figure 1 qui représente le panneau de commande de la figure 1 dépourvu de sa façade de manière à faire apparaître les dispositifs de rétro-éclairage équipant le commutateur rotatif latéral gauche et le commutateur rotatif central ;
- la figure 3 est une vue en perspective selon le point de vue V3 de la figure 4 qui représente le commutateur rotatif latéral droit du panneau de commande de la figure 1 et son dispositif de rétro-éclairage ;
- la figure 4 est une vue en perspective selon le point de vue V4 de la figure 3 qui représente le commutateur rotatif latéral droit de la figure 3 dépourvu de sa molette rotative ;
- la figure 5 est une vue partiellement éclatée en perspective selon le point de vue V5 de la figure 3 qui représente le commutateur rotatif latéral droit de la figure 3 ;
- la figure 6 est une vue de côté qui représente le commutateur rotatif central du panneau de commande de la figure 1 et son dispositif de rétro-éclairage ;
- la figure 7 est une vue en perspective qui représente le commutateur rotatif central de la figure 6 et son dispositif de rétro-éclairage ;
- la figure 8 est une vue en perspective selon un angle légèrement différent de celui de la figure 7 qui représente le commutateur rotatif central de la figure 6 dépourvu de sa molette rotative.

### DESCRIPTION DES MODES DE REALISATION PREFERES

Dans la suite de la description, des éléments identiques ou similaires seront désignés par les mêmes références.

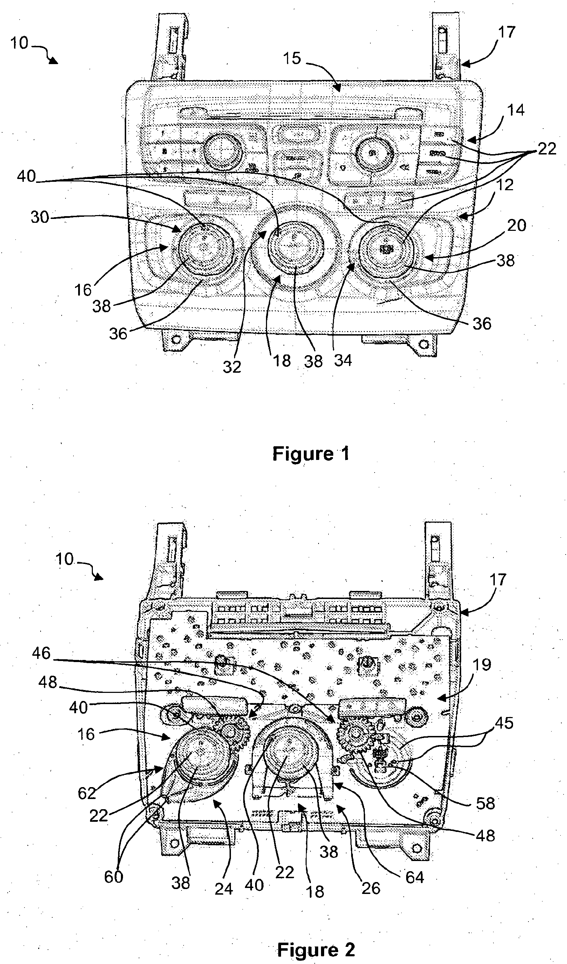

Sur les figures 1 et 2, on a représenté un panneau de commande 10 de véhicule automobile comportant un premier dispositif de commande 12 prévu pour commander un système de climatisation et de ventilation, et un second dispositif de commande 14 prévu pour commander d'autres systèmes tels qu'un autoradio et un système de navigation. Le panneau de commande 10 est prévu pour être agencé dans le tableau de bord du véhicule. Il comporte une façade 15, ou capot, qui est fixé sur un cadre de support 17 en forme de plaque. Les dispositifs de commande 12, 14 sont montés sur une platine 19, ici une plaque à circuits imprimés, qui est fixée sur le cadre de support 17, derrière la façade 15. La figure 2 représente le panneau de commande 10 sans la façade 15 et sans le second dispositif de commande 14.

Les dispositifs de commande 12, 14 sont équipés de commutateurs rotatifs 16, 18, 20 et de boutons-poussoirs 22, ainsi que de dispositifs de rétro-éclairage 24, 26, 28 associés. Une zone d'affichage périphérique 30, 32, 34 est agencée autour de chaque commutateur rotatif 16, 18, 20. Chaque zone d'affichage périphérique 30, 32, 34 comporte des symboles lumineux fixes 36 tels que des pictogrammes ou autres figures géométriques qui représentent les différentes fonctions associées aux différentes positions angulaires des commutateurs rotatifs 16, 18, 20 et qui sont rétro-éclairés. Selon le mode de réalisation représenté, les zones d'affichage périphériques 30, 32, 34 sont situées sur des portions de la façade 15 qui entourent les commutateurs rotatifs 16, 18, 20.

Selon le mode de réalisation représenté, en considérant les figures 1 et 2, un commutateur rotatif latéral gauche 16 est destiné à contrôler une fonction d'orientation du flux d'air du système de climatisation et de ventilation, un commutateur rotatif central 18 est destiné à contrôler la vitesse de la soufflerie du système de climatisation et de ventilation, et un commutateur rotatif latéral droit 20 est destiné à contrôler la température de chauffage du système de climatisation et de ventilation.

Chaque commutateur rotatif 16, 18, 20 comporte une molette 38 annulaire qui est montée à rotation par rapport à la platine 19 autour d'un axe A1 sensiblement perpendiculaire à la platine 19. Chaque molette 38 est pourvue d'un index lumineux 40 périphérique qui tourne avec la molette 38 et qui est rétro-éclairé par le dispositif de rétro-éclairage 24, 26, 28 associé au commutateur rotatif 16, 18, 20. L'index lumineux 40 permet de repérer la position angulaire active de la molette 38 et du commutateur rotatif 16, 18, 20 associé.

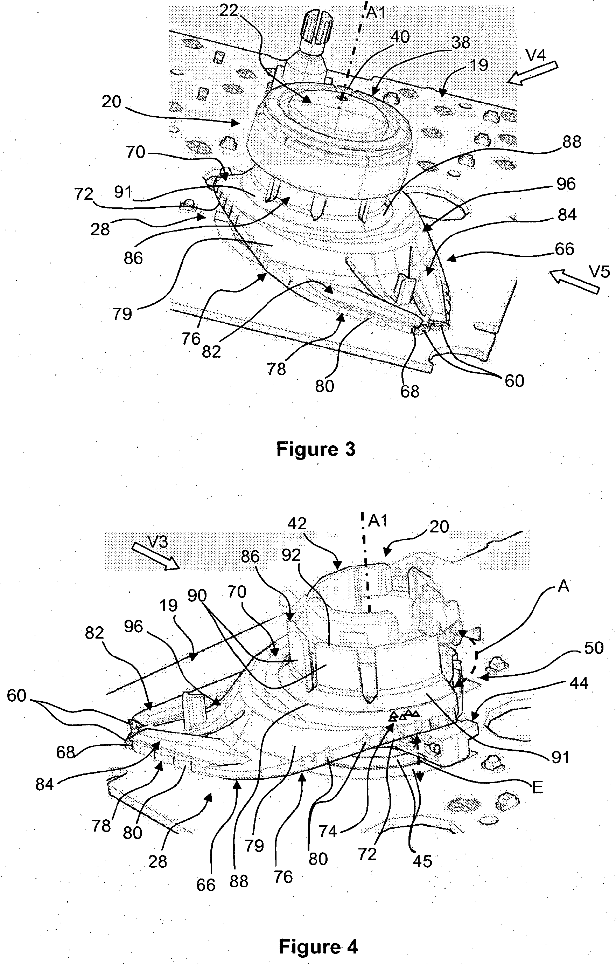

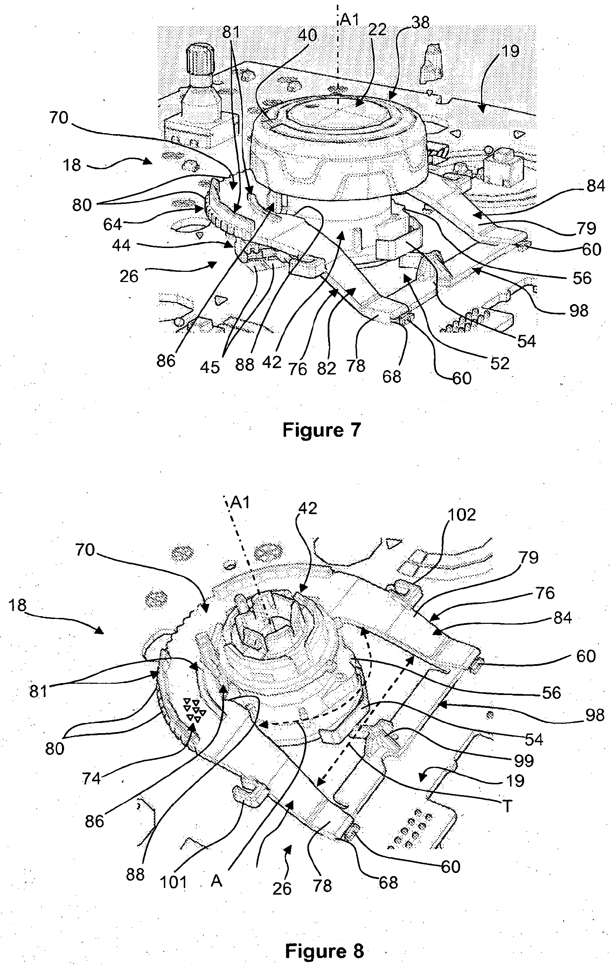

En considérant en particulier les figures 3 à 8, chaque commutateur rotatif 16, 18, 20 comporte un corps tubulaire 42 qui est lié en rotation à la molette 38. Ce corps tubulaire 42 est pourvu d'un bras transversal 44 muni de moyens de contact électrique qui coopèrent par glissement avec des pistes électriques conductrices 45 agencées sur la platine 19 de manière à former un dispositif de commutation électrique mobile permettant de produire un signal électrique de commutation qui est dépendant de la position angulaire de la molette 38 et qui est lié à la fonction commandée par le commutateur rotatif 16, 18, 20.

Selon le mode de réalisation représenté sur les figures, les commutateurs rotatifs latéraux 16, 20 comportent chacun une liaison mécanique 46 à engrenage avec le système de ventilation et de climatisation pour commander par exemple le pivotement de volets (non représentés). La liaison mécanique 46 comporte ici une roue dentée 48 qui engrène avec une denture 50 agencée sur le corps tubulaire 42. Par ailleurs, le commutateur rotatif central 18 comporte un dispositif haptique 52 mécanique sous la forme d'une lame élastiquement flexible 54 qui est fixée sur la platine 19 et qui coopère avec une surface de came 56 crantée agencée sur le corps tubulaire 42 associé de manière à produire un retour d'effort sur la molette 38 lorsqu'elle est manipulée manuellement par un utilisateur.

Bien entendu, le dispositif haptique 52 pourrait être réalisé de manière différente, par exemple au moyen d'un doigt d'indexation sollicité élastiquement contre la surface de came 56.

De manière avantageuse, chaque commutateur rotatif 16, 18, 20 comporte un bouton-poussoir 22 qui est agencé dans l'espace annulaire délimité par la molette 38, à l'intérieur du corps tubulaire 42. Le bouton-poussoir 22 est prévu pour coopérer avec un commutateur à bouton-poussoir 58 agencé sur la platine 19 pour commander par exemple l'allumage et l'extinction du système de ventilation et de climatisation, ou pour commander le déclenchement d'un mode de fonctionnement particulier du système de ventilation et de climatisation tel que le désembuage. Chaque bouton-poussoir 22 possède ici son propre dispositif de rétro-éclairage (non représenté) distinct de celui utilisé pour le commutateur rotatif 16, 18, 20.

Conformément aux enseignements de l'invention, chaque commutateur rotatif 16, 18, 20 et sa zone d'affichage périphérique 30, 32, 34 associée sont rétro-éclairés par le même dispositif de rétro-éclairage 24, 26, 28. A cet effet, chaque dispositif de rétro-éclairage 24, 26, 28 comporte au moins une source lumineuse 60 qui coopère avec un guide de lumière 62, 64, 66 éclairant à la fois l'index lumineux 40 et la zone d'affichage périphérique 30, 32, 34 associée.

Les guides de lumière 62, 64, 66 sont réalisés dans une matière ayant des propriétés optiques aptes à la fonction de guidage de la lumière. De préférence ils sont réalisés en matière plastique, par exemple du PMMA (polymétacrylate de méthyle) ou du PC (polycarbonate) translucide. Comme on peut le voir sur les figures 3 à 8, chaque guide de lumière 62, 64, 66 est réalisé d'une seule pièce et est monté fixe sur la platine 19.

Avantageusement, la source lumineuse 60 est déportée transversalement par rapport au commutateur rotatif 16, 18, 20 et par rapport à la zone d'affichage périphérique 30, 32, 34 associés. Elle est constituée ici par une diode électroluminescente qui est montée sur la platine 19 et qui est du type à émission lumineuse latérale de sorte que la lumière est émise suivant une direction globalement parallèle au plan de la platine 19 en direction d'une surface d'entrée 68 du guide de lumière 62, 64, 66 associé.

Selon une variante de réalisation (non représentée), la source lumineuse 60 peut être une diode du type à émission lumineuse verticale (« top led »). Dans ce cas, la forme du guide de lumière 62, 64, 66 et la surface d'entrée 68 sont adaptés à la configuration d'émission lumineuse de la diode.

Dans l'exemple de réalisation représenté sur les figures, les guides de lumière latéraux 62, 66 des dispositifs de rétro-éclairage latéraux 24, 28 sont réalisés suivant un premier mode de réalisation qui est représenté en détail sur les figures 3 à 5. Les guides de lumière latéraux 62, 66 sont sensiblement identiques et agencés de manière globalement symétrique par rapport à un plan axial de symétrie passant par le commutateur rotatif central 18.

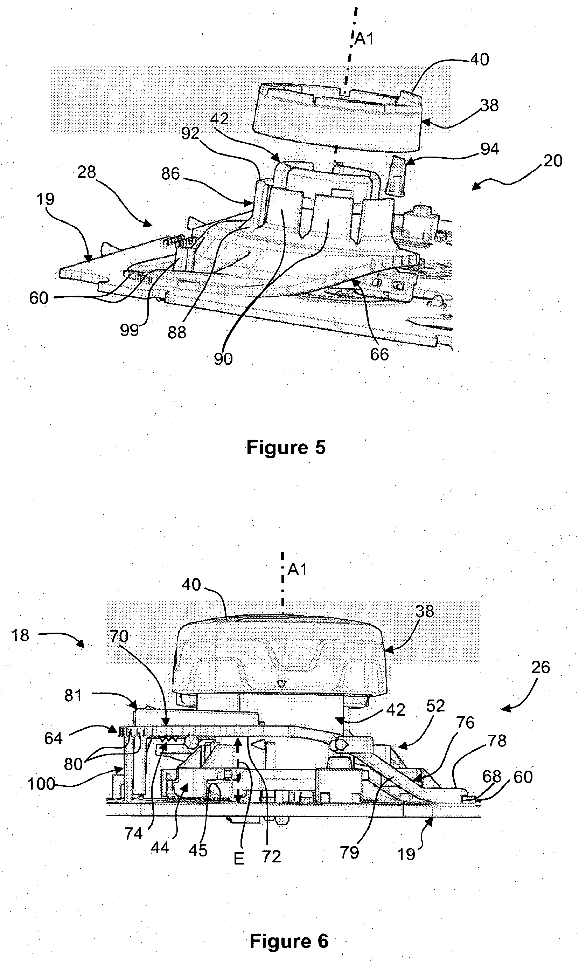

Le guide de lumière central 64 du dispositif de rétro-éclairage central 26 est réalisé suivant un second mode de réalisation qui est représenté en détail sur les figures 6 à 8.

Conformément aux enseignements de l'invention, chaque guide de lumière 62, 64, 66 a globalement la forme d'une lame qui comporte une surface d'entrée 68 agencée dans un bord de la lame et prévue pour permettre une propagation de la lumière émise par la source 60 dans le plan de la lame.

Chaque guide de lumière 62, 64, 66 comporte une portion globalement transversale 70 en forme de secteur annulaire qui est prévue pour rétro-éclairer la zone d'affichage périphérique associée 30, 32, 34. Cette portion transversale 70 s'étend donc sous les symboles lumineux fixes 36. Pour permettre ce rétro-éclairage, la face inférieure 72 de la portion transversale 70 comporte, au droit des symboles lumineux fixes 36, des structures optiques 74 en relief qui visent à diffuser une partie de la lumière se propageant dans la portion transversale 70 vers l'extérieur du guide de lumière 62, 64, 66 en direction des symboles lumineux fixes 36. Les structures optiques 74 peuvent être des rugosités de surface formant ainsi des micro-facettes de réflexion pour les rayons lumineux se propageant dans le guide de lumière 62, 64, 66. Ces structures optiques 74 peuvent être obtenues par moulage lors de la fabrication du guide de lumière 62, 64, 66 ou par un traitement de surface appliqué sur la face inférieure 72. Les structures optiques 74 sont représentées de manière très schématique et de manière agrandie sur les figures.

Avantageusement, la portion transversale 70 est agencée au-dessus de la platine 19 de manière à ménager un espace axial E entre la face inférieure 72 de la portion transversale 70 et la face supérieure de la platine 19. Ceci permet d'agencer des composants sous la portion transversale 70. En particulier, dans le présent mode de réalisation, l'espace axial E permet l'agencement et le passage du bras transversal 44 servant au dispositif de commutation électrique mobile associé au commutateur rotatif 16, 18, 20.

Les extrémités circonférentielles du secteur angulaire formé par la portion transversale 70 autour du corps tubulaire 42 du commutateur rotatif 16, 18, 20, permettent de libérer un espace angulaire A dans lequel il est possible d'agencer des composants, tels que la liaison mécanique 46 à engrenage pour les commutateurs rotatifs latéraux 16, 20, et tel que le dispositif haptique 52 pour le commutateur rotatif central 18.

Chaque guide de lumière 62, 64, 66 comporte ici une portion de guidage 76 qui s'étend depuis la source lumineuse 60 jusqu'à un bord périphérique de la portion transversale 70. La portion de guidage 76 comporte, depuis la source lumineuse 60 jusqu'à la portion transversale 70, une portion plane 78 agencée sur la platine 19 et une portion inclinée 79 qui permettent de collecter et transmettre les rayons lumineux émis par la source 60 avec le meilleur rendement possible. Pour améliorer ce rendement, les bords périphériques de la portion de guidage 76 et de la portion transversale 70 comportent des encoches 80 réparties de manière optimales pour dévier les rayons lumineux vers les zones les plus utiles au rétro-éclairage et pour éviter au maximum les pertes lumineuses par les bords périphériques.

Avantageusement, les guides de lumière 62, 64, 66 peuvent comporter sur la portion transversale des murets 81 qui sont agencés de manière appropriée pour minimiser les émissions lumineuses parasites hors des zones d'affichage périphériques 30, 32, 34.

Pour améliorer l'efficacité du rétro-éclairage, le guide de lumière 62, 64, 66 comporte de préférence deux sources lumineuses 60 et la portion de guidage 76 comporte deux branches 82, 84 qui s'étendent chacune depuis le bord périphérique de la portion transversale 70 jusqu'à la source lumineuse 60 associée.

Selon le mode de réalisation préféré de l'invention, le guide de lumière 62, 64, 66 comporte une portion axiàle 86 qui s'étend à l'intérieur de la molette 38 associée, vers l'index lumineux 40, depuis le bord périphérique interne 88 de la portion transversale 70. L'orientation interne/externe est définie ici radialement par rapport à l'axe A1. La portion axiale 86 est ici formée de plusieurs languettes axiales 90 qui s'étendent en arc de cercle autour de l'axe de rotation A1. Chaque languette 90 est reliée au bord périphérique interne 88 de la portion transversale 70 par une portion de liaison 91 qui est recourbée ou inclinée de manière à assurer au maximum une réfraction totale des rayons lumineux se propageant dans le guide de lumière 62, 64, 66 vers l'extrémité supérieure 92 de la portion axiale 86.

La portion axiale 86 est prévue pour rétro-éclairer l'index lumineux 40. A cet effet, la portion axiale 86 s'étend sur un secteur angulaire autour de l'axe de rotation A1, ledit secteur angulaire correspondant globalement à l'amplitude angulaire maximale de déplacement de l'index lumineux 40, et l'index lumineux 40 est agencé globalement au droit de la portion axiale 86. Pour assurer un guidage optimal de la lumière jusqu'à l'index lumineux 40, un guide de lumière intermédiaire 94 en forme de tige axiale est agencée dans la molette 38. Ce guide de lumière intermédiaire 94 s'étend globalement depuis l'extrémité axiale supérieure 92 de la portion axiale 86 jusqu'à la fenêtre qui forme l'index lumineux 40 dans la partie supérieure de la molette 38.

On décrit maintenant les éléments qui distinguent les guides de lumière 62, 66 selon le premier mode de réalisation du guide de lumière 64 selon le second mode de réalisation.

Dans les guides de lumière 62, 66 selon le premier mode de réalisation, les deux branches 82, 84 se rejoignent au niveau des deux sources lumineuses 60 qui sont sensiblement adjacentes sur la platine 19.

Dans le guide de lumière 64 selon le second mode de réalisation, les deux branches 82, 84 sont sensiblement parallèles et définissent un espace transversal T, les deux sources lumineuses 60 associées étant relativement éloignées l'une de l'autre sur la platine 19.

Avantageusement, l'espace libre entre les deux branches 82, 84 est mis à profit pour agencer une portion d'appui et de positionnement 96, 98 qui est prévue pour constituer un appui et un élément de positionnement du guide de lumière 62, 64, 66 associé sur la platine 19. Chaque portion d'appui et de fixation 96, 98 est ici réalisée d'une seule pièce avec le corps du guide de lumière 62, 64, 66 associé.

Dans le premier mode de réalisation correspondant aux guides de lumière latéraux 62, 66, la portion d'appui et de positionnement 96 s'étend vers la platine depuis le bord périphérique de la portion transversale 70.

Dans le second mode de réalisation correspondant au guide de lumière central 64, la portion d'appui et de positionnement 98 est constituée par une traverse qui s'étend transversalement entre les deux portions planes 78 des branches 82, 84.

Avantageusement, chaque portion d'appui et de positionnement 96, 98 comporte un plot 99 qui est reçu dans un logement complémentaire (non représenté) d'une plaque intermédiaire prévue pour être montée, par-dessus les guides de lumière 62, 64, 66, entre la platine 19 et la façade 15. Ainsi, chaque guide de lumière 62, 64, 66 est maintenu en position sur la platine 19 par la plaque intermédiaire. De manière additionnelle, le guide de lumière central 64 comporte deux encoches de positionnement 101, 102 qui sont réalisées venues de matière respectivement avec les deux branches 82, 84 et qui sont prévues pour recevoir de manière complémentaire deux tenons de positionnement (non représentés) agencés sur la plaque intermédiaire.

Selon le mode de réalisation préféré du guide de lumière central 64, une patte d'appui auxiliaire 100 s'étend sous la portion transversale 70, à l'opposé de la portion d'appui et de fixation 98, de manière à assurer une bonne stabilité du guide de lumière central 64 sur la platine 19.

## Revendications

1. Dispositif de commande (12), notamment pour un véhicule automobile, comportant :
- une platine (19),
- un commutateur rotatif (16, 18, 20) et une zone d'affichage périphérique (30, 32, 34) qui sont agencés sur la platine (19),
- un dispositif de rétro-éclairage (24, 26, 28) prévu pour rétro-éclairer le commutateur rotatif (16, 18, 20) et la zone d'affichage périphérique (30, 32, 34), le commutateur rotatif (16, 18, 20) comportant une molette (38) qui est montée à rotation par rapport à la platine (19) autour d'un axe (A1), la molette (38) étant pourvue d'un index lumineux (40) tournant avec la molette (38), la zone d'affichage périphérique (30, 32, 34) comportant des symboles lumineux fixes (36) agencés autour du commutateur rotatif (16, 18, 20), où le dispositif de rétro-éclairage (24, 26, 28) comporte au moins une source lumineuse (60) qui coopère avec un guide de lumière (62, 64, 66) éclairant à la fois l'index lumineux (40) et la zone d'affichage périphérique (30, 32, 34), le guide de lumière (62, 64, 66) étant réalisé d'une seule pièce et fixé sur la platine (19) ;
la zone d'affichage périphérique (30, 32, 34) étant rétro-éclairée par une portion globalement transversale (70) du guide de lumière (62, 64, 66) ; et le guide de lumière (62, 64, 66) comportant une portion axiale (86) qui s'étend à l'intérieur de la molette (38) vers l'index (40), depuis le bord périphérique interne de la portion transversale (70), de manière à rétro-éclairer l'index (40).

2. Dispositif de commande (12) rotatif selon la revendication précédente, **caractérisé en ce que** la source lumineuse (60) est déportée transversalement par rapport au commutateur rotatif (16, 18, 20) et par rapport à la zone d'affichage périphérique (30, 32, 34), et **en ce que** le guide de lumière (62, 64, 66) comporte une portion de guidage (76) qui s'étend depuis la source lumineuse (60) jusqu'à un bord périphérique de la portion transversale (70).

3. Dispositif de commande (12) rotatif selon la revendication précédente, **caractérisé en ce qu'**il comporte deux sources lumineuses (60), et **en ce que** la portion de guidage (76) comporte deux branches (82, 84) qui s'étendent chacune depuis le bord périphérique de la portion transversale (70) jusqu'à la source lumineuse (60) associée.

4. Dispositif de commande (12) rotatif selon la revendication 2 ou 3, **caractérisé en ce que** la portion transversale (70) est agencée au-dessus de la platine (19) de manière à ménager un espace axial (E).

5. Dispositif de commande (12) rotatif selon la revendication précédente, **caractérisé en ce que** la portion de guidage (76) comporte une portion inclinée (79) entre la source lumineuse (60), qui est située globalement au niveau de la platine (19), et le bord périphérique de la portion transversale (70).

6. Dispositif de commande (12) rotatif selon la revendication 4 ou 5, **caractérisé en ce qu'**un dispositif de commutation électrique mobile, lié en rotation à la molette (38), est agencé dans l'espace axial (E) de manière à produire un signal de commutation dépendant de la position angulaire de la molette (38).

7. Dispositif de commande (12) rotatif selon l'une quelconque des revendications 1 à 6, **caractérisé en ce que** le guide de lumière (62, 64, 66) a globalement la forme d'une lame qui comporte une surface d'entrée prévue pour permettre une propagation de la lumière émise par la source (60) dans le plan de la lame, et **en ce qu'**au moins une face transversale de la portion transversale (70) est pourvue de structures en relief visant à diffuser une partie de la lumière qui se propage dans la portion transversale (70) vers l'extérieur du guide de lumière (62, 64, 66) en direction des symboles lumineux fixes (36) de la zone d'affichage périphérique (30, 32, 34).

8. Dispositif de commande (12) rotatif selon l'une quelconque des revendications précédentes, **caractérisé en ce que** la portion axiale (86) s'étend sur un secteur angulaire autour de l'axe de rotation (A1), ledit secteur angulaire correspondant globalement à l'amplitude angulaire maximale de déplacement de l'index lumineux (40).

9. Dispositif de commande (12) rotatif selon la revendication précédente, **caractérisé en ce que** la portion axiale (86) est formée de plusieurs languettes axiales (90) qui s'étendent en arc de cercle autour de l'axe de rotation (A1).

10. Dispositif de commande (12) rotatif selon l'une quelconque des revendications précédentes, **caractérisé en ce qu'**un élément intermédiaire (94) formant guide de lumière est agencé dans la molette (38) de manière à guider la lumière provenant de la portion axiale (86) jusqu'à l'index lumineux (40).

11. Dispositif de commande (12) rotatif selon l'une quelconque des revendications 1 à 10, **caractérisé en ce que** le commutateur rotatif (16, 20) comporte un corps tubulaire (42) qui est lié en rotation à la molette (38), **en ce que** la portion transversale (70) s'étend autour du corps tubulaire (42) suivant un secteur angulaire dont les extrémités délimitent un espace angulaire, et **en ce qu'**une liaison mécanique (46) entre le corps tubulaire (42) et un élément mécanique monté sur la platine (19) est agencée dans l'espace angulaire.

12. Dispositif de commande (12) rotatif selon la revendication précédente, **caractérisé en ce que** l'élément mécanique est une roue dentée (48) qui coopère avec une denture (50) agencée sur le corps tubulaire (42).

13. Dispositif de commande (12) rotatif selon la revendication 11, **caractérisé en ce que** l'élément mécanique est une lame élastiquement flexible (54) qui coopère avec une surface de came (56) agencée sur le corps tubulaire (42) de manière à produire un retour d'effort sur la molette (38).

## Patentansprüche

1. Steuervorrichtung (12), insbesondere für ein Kraftfahrzeug, enthaltend:
- eine Platine (19),
- einen Drehschalter (16, 18, 20) und einen umlaufenden Anzeigebereich (30, 32, 34), die an der Platine (19) angeordnet sind,
- eine Hinterleuchtungsvorrichtung (24, 26, 28) zum Hinterleuchten des Drehschalters (16, 18, 20) und des umlaufenden Anzeigebereichs (30, 32, 34), wobei der Drehschalter (16, 18, 20) ein Rändelrad (38) aufweist, das bezüglich der Platine (19) um eine Achse (A1) drehbar gelagert ist, wobei das Rändelrad (38) mit einem Leuchtzeiger (40) versehen ist, der sich mit dem Rändelrad (38) dreht, wobei der umlaufende Anzeigebereich (30, 32, 34) feste Leuchtsymbole (36) aufweist, die um den Drehschalter (16, 18, 20) herum angeordnet sind, wobei die Hinterleuchtungsvorrichtung (24, 26, 28) zumindest eine Lichtquelle (60) aufweist, die mit einem Lichtleiter (62, 64, 66) zusammenwirkt, welcher zugleich den Leuchtzeiger (40) und den umlaufenden Anzeigebereich (30, 32, 34) ausleuchtet, wobei der Lichtleiter (62, 64, 66) aus einem Stück gefertigt und an die Platine (19) befestigt ist;
wobei der umlaufende Anzeigebereich (30, 32, 34) von einem im Wesentlichen quer verlaufenden Abschnitt (70) des Lichtleiters (62, 64, 66) hinterleuchtet wird und der Lichtleiter (62, 64, 66) einen axial verlaufenden Abschnitt (86) aufweist, der sich innerhalb des Rändelrads (38) zum Zeiger (40) hin vom umlaufenden Innenrand des quer verlaufenden Abschnitts (70) ausgehend erstreckt, so dass der Zeiger (40) hinterleuchtet wird.

2. Drehbare Steuervorrichtung (12) nach dem vorangehenden Anspruch, **dadurch gekennzeichnet, dass** die Lichtquelle (60) bezüglich des Drehschalters (16, 18, 20) und bezüglich des umlaufenden Anzeigebereichs (30, 32, 34) quer versetzt angeordnet ist und dass der Lichtleiter (62, 64, 66) einen Führungsabschnitt (76) aufweist, der sich von der Lichtquelle (60) bis zu einem umlaufenden Rand des quer verlaufenden Abschnitts (70) erstreckt.

3. Drehbare Steuervorrichtung (12) nach dem vorangehenden Anspruch, **dadurch gekennzeichnet, dass** sie zwei Lichtquellen (60) aufweist und dass der Führungsabschnitt (76) zwei Schenkel (82, 84) aufweist, die sich jeweils von dem umlaufenden Rand des quer verlaufenden Abschnitts (70) bis zur zugeordneten Lichtquelle (60) erstrecken.

4. Drehbare Steuervorrichtung (12) nach Anspruch 2 oder 3, **dadurch gekennzeichnet, dass** der quer verlaufende Abschnitt (70) oberhalb der Platine (19) so angeordnet ist, dass ein axialer Raum (E) freigelassen wird.

5. Drehbare Steuervorrichtung (12) nach dem vorangehenden Anspruch, **dadurch gekennzeichnet, dass** der Führungsabschnitt (76) einen geneigten Abschnitt (79) zwischen der Lichtquelle (60), die im Wesentlichen im Bereich der Platine (19) liegt, und dem umlaufenden Rand des quer verlaufenden Abschnitts (70) aufweist.

6. Drehbare Steuervorrichtung (12) nach Anspruch 4 oder 5, **dadurch gekennzeichnet, dass** eine bewegliche elektrische Schaltvorrichtung, die drehfest mit dem Rändelrad (38) verbunden ist, in dem axialen Raum (E) so angeordnet ist, dass ein von der Winkelstellung des Rändelrads (38) abhängiges Schaltsignal erzeugt wird.

7. Drehbare Steuervorrichtung (12) nach einem der Ansprüche 1 bis 6, **dadurch gekennzeichnet, dass** der Lichtleiter (62, 64, 66) im Wesentlichen die Form eines Stegs aufweist, der eine Eintrittsfläche enthält, die dazu vorgesehen ist, eine Ausbreitung des von der Quelle (60) emittierten Lichts in der Ebene des Stegs zu gestatten, und dass zumindest eine Querseite des quer verlaufenden Abschnitts (70) mit reliefartigen Strukturen versehen ist, die darauf abzielen, einen Teil des Lichts zu verteilen, das sich in dem quer verlaufenden Abschnitt (70) nach außerhalb des Lichtleiters (62, 64, 66) in Richtung der festen Leuchtsymbole (36) des umlaufenden Anzeigebereichs (30, 32, 34) ausbreitet.

8. Drehbare Steuervorrichtung (12) nach einem der vorangehenden Ansprüche, **dadurch gekennzeichnet, dass** der axiale Abschnitt (86) sich über einen Winkelsektor um die Drehachse (A1) herum erstreckt, wobei der Winkelsektor im Wesentlichen der maximalen Winkelamplitude der Verlagerung des Leuchtzeigers (40) entspricht.

9. Drehbare Steuervorrichtung (12) nach dem vorangehenden Anspruch, **dadurch gekennzeichnet, dass** der axiale Abschnitt (86) aus mehreren axialen Zungen (90) gebildet ist, die sich im Kreisbogen um die Drehachse (A1) herum erstrecken.

10. Drehbare Steuervorrichtung (12) nach einem der vorangehenden Ansprüche, **dadurch gekennzeichnet, dass** ein lichtleiterartiges Zwischenelement (94) in dem Rändelrad (38) so angeordnet ist, dass es das von dem axialen Abschnitt (86) stammende Licht zum Leuchtzeiger (40) führt.

11. Drehbare Steuervorrichtung (12) nach einem der Ansprüche 1 bis 10, **dadurch gekennzeichnet, dass** der Drehschalter (16, 20) einen rohrförmigen Körper (42) aufweist, der drehfest mit dem Rändelrad (38) verbunden ist, dass der quer verlaufende Abschnitt (70) sich um den rohrförmigen Körper (42) herum über einen Winkelsektor erstreckt, dessen Enden einen winkelförmige Raum eingrenzen, und dass eine mechanische Verbindung (46) zwischen dem rohrförmigen Körper (42) und einem an der Platine (19) angebrachten mechanischen Element in dem winkelförmigen Raum angeordnet ist.

12. Drehbare Steuervorrichtung (12) nach dem vorangehenden Anspruch, **dadurch gekennzeichnet, dass** das mechanische Element ein Zahnrad (48) ist, das mit einer Verzahnung (50) zusammenwirkt, die an dem rohrförmigen Körper (42) angeordnet ist.

13. Drehbare Steuervorrichtung (12) nach Anspruch 11, **dadurch gekennzeichnet, dass** das mechanische Element ein elastisch biegsamer Steg (54) ist, der mit einer Nockenfläche (56) zusammenwirkt, die an dem rohrförmigen Körper (42) so angeordnet ist, dass eine Kraftrückkopplung auf das Rändelrad (38) erfolgt.

## Claims

1. Control device (12) in particular for a motor vehicle, comprising:
- a board (19),
- a rotary switch (16, 18, 20) and a peripheral display zone (30, 32, 34) which are arranged on the board (19),
- a back-lighting device (24, 26, 28) designed to backlight the rotary switch (16, 18, 20) and the peripheral display zone (30, 32, 34), the rotary switch (16, 18, 20) comprising a knob (38) which is rotatably mounted with respect to the board (19) about an axis (A1), the knob (38) being provided with an illuminated pointer (40) turning with the knob (38), the peripheral display zone (30, 32, 34) comprising fixed illuminated symbols (36) arranged around the rotary switch (16, 18, 20), wherein
the backlighting device (24, 26, 28) comprises at least one light source (60) which cooperates with a light guide (62, 64, 66) lighting both the illuminated pointer (40) and the peripheral display zone (30, 32, 34), the light guide (62, 64, 66) being made in one piece and fixed to the board (19);
the peripheral display zone (30, 32, 34) being backlit by a generally transverse portion (70) of the light guide (62, 64, 66); and the light guide (62, 64, 66) comprising an axial portion (86) which extends inside the knob (38) towards the pointer (40) from the internal peripheral edge of the transverse portion (70) so as to backlight the pointer (40).

2. Rotary control device (12) according to the preceding claim, **characterized in that** the light source (60) is offset transversally with respect to the rotary switch (16, 18, 20) and with respect to the peripheral display zone (30, 32, 34), and **in that** the light guide (62, 64, 66) comprises a guide portion (76) which extends from the light source (60) to a peripheral edge of the transverse portion (70).

3. Rotary control device (12) according to the preceding claim, **characterized in that** it comprises two light sources (60), and **in that** the guide portion (76) comprises two branches (82, 84) which each extend from the peripheral edge of the transverse portion (70) to the associated light source (60).

4. Rotary control device (12) according to Claim 2 or 3, **characterized in that** the transverse portion (70) is arranged above the board (19) so as to form an axial space (E).

5. Rotary control device (12) according to the preceding claim, **characterized in that** the guide portion (76) comprises an inclined portion (79) between the light source (60), which is generally situated at the level of the board (19), and the peripheral edge of the transverse portion (70).

6. Rotary control device (12) according to Claim 4 or 5, **characterized in that** a moveable electrical switching device coupled in rotation to the knob (38) is arranged in the axial space (E) so as to produce a switching signal dependent on the angular position of the knob (38).

7. Rotary control device (12) according to any one of Claims 1 to 6, **characterized in that** the light guide (62, 64, 66) has the general form of a strip which comprises an input surface designed to allow propagation of the light emitted by the source (60) in the plane of the strip, and **in that** at least one transverse face of the transverse portion (70) is provided with relief structures intended to diffuse a part of the light which is propagated in the transverse portion (70) towards the outside of the light guide (62, 64, 66) in the direction of the fixed illuminated symbols (36) of the peripheral display area (30, 32, 34).

8. Rotary control device (12) according to any one of the preceding claims, **characterized in that** the axial portion (86) extends over an angular sector about the axis of rotation (A1), the said angular sector generally corresponding to the maximum angular amplitude of displacement of the illuminated pointer (40).

9. Rotary control device (12) according to the preceding claim, **characterized in that** the axial portion (86) is formed by a plurality of axial tongues (90) which extend in an arc of a circle about the axis of rotation (A1).

10. Rotary control device (12) according to any one of the preceding claims, **characterized in that** an intermediate element (94) forming a light guide is arranged in the knob (38) so as to guide the light emanating from the axial portion (86) to the illuminated pointer (40).

11. Rotary control device (12) according to any one of Claims 1 to 10, **characterized in that** the rotary switch (16, 20) comprises a tubular body (42) which is coupled in rotation to the knob (38), **in that** the transverse portion (70) extends around the tubular body (42) over an angular sector of which the ends define an angular space and **in that** a mechanical connection (46) between the tubular body (42) and a mechanical element mounted on the board (19) is arranged in the angular space.

12. Rotary control device (12) according to the preceding claim, **characterized in that** the mechanical element is a toothed wheel (48) which cooperates with a toothing (50) arranged on the tubular body (42).

13. Rotary control device (12) according to Claim 11, **characterized in that** the mechanical element is an elastically flexible strip (54) which cooperates with a cam surface (56) arranged on the tubular body (42) so as to produce a force-feedback on the knob (38).
